(19) Europäisches Patentamt
European Patent Office
Office européen des brevets

(11) **EP 4 425 615 A1**

(12) **EUROPEAN PATENT APPLICATION**
published in accordance with Art. 153(4) EPC

(43) Date of publication:
**04.09.2024 Bulletin 2024/36**

(21) Application number: **22886685.1**

(22) Date of filing: **11.10.2022**

(51) International Patent Classification (IPC):
**H01M 4/62** (2006.01)    **H01M 4/139** (2010.01)
**H01M 10/052** (2010.01)    **H01M 10/0566** (2010.01)

(52) Cooperative Patent Classification (CPC):
**H01M 4/139; H01M 4/62; H01M 10/052;**
**H01M 10/0566;** Y02E 60/10

(86) International application number:
**PCT/JP2022/037914**

(87) International publication number:
**WO 2023/074356 (04.05.2023 Gazette 2023/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.10.2021 JP 2021178131**

(71) Applicant: **Zeon Corporation**
**Tokyo 100-8246 (JP)**

(72) Inventors:
• **MIWATA, Tomohiro**
**Tokyo 100-8246 (JP)**
• **ADACHI, Yusuke**
**Tokyo 100-8246 (JP)**

(74) Representative: **Maiwald GmbH**
**Elisenhof**
**Elisenstraße 3**
**80335 München (DE)**

(54) **BINDER COMPOSITION FOR NON-AQUEOUS SECONDARY BATTERY NEGATIVE ELECTRODE, SLURRY COMPOSITION FOR NON-AQUEOUS SECONDARY BATTERY NEGATIVE ELECTRODE, NEGATIVE ELECTRODE FOR NON-AQUEOUS SECONDARY BATTERY, AND NON-AQUEOUS SECONDARY BATTERY**

(57)    A binder composition for a non-aqueous secondary battery negative electrode contains a particulate polymer and water. The particulate polymer is formed of a polymer including an ethylenically unsaturated carboxylic acid monomer unit, an aromatic vinyl monomer unit, and an alkylene structural unit. A binder film formed using the binder composition for a non-aqueous secondary battery negative electrode displays a maximum displacement of 30 μm or less when the binder film compressed to a maximum load of 20 mN at a loading rate of 0.2975 mN/s using a micro compression tester.

EP 4 425 615 A1

**Description**

TECHNICAL FIELD

The present disclosure relates to a binder composition for a non-aqueous secondary battery negative electrode, a slurry composition for a non-aqueous secondary battery negative electrode, a negative electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher secondary battery performance.

An electrode used in a secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

Attempts have been made to improve binder compositions used in electrode mixed material layer formation in recent years in order to achieve further improvement of secondary battery performance (for example, Patent Literature (PTL) 1 to 3).

PTL 1 discloses a binder composition containing a copolymer binder that includes at least one unit selected from the group consisting of a unit derived from a vinyl-based monomer, a unit derived from a conjugated diene-based monomer or a conjugated diene-based polymer, and a unit derived from a (meth)acrylic acid ester-based monomer and that also includes a unit derived from a water-soluble polymer, wherein the copolymer binder has a specific wet modulus.

PTL 2 discloses a binder composition containing a liquid medium and polymer particles having a value within a specific range for a ratio of average particle diameter measured by dynamic light scattering and average particle diameter measured by TEM observation.

PTL 3 discloses a binder composition containing polymer particles, wherein the polymer particles contain, in specific proportions, a block polymer that includes a specific monomer unit and a polymer that does not include a specific monomer unit.

CITATION LIST

Patent Literature

PTL 1: WO2018/182343A1
PTL 2: WO2016/039067A1
PTL 3: WO2021/065742A1

SUMMARY

(Technical Problem)

In a negative electrode of a secondary battery, an electrode active material that is contained in the negative electrode (hereinafter, referred to as a "negative electrode active material") may expand and contract in accompaniment to charging and discharging. As expansion and contraction of the negative electrode active material are repeated, the negative electrode gradually swells, and the secondary battery changes shape, which may cause deterioration of electrical characteristics such as cycle characteristics.

Therefore, it is desirable to suppress swelling of a negative electrode in accompaniment to repeated charging and discharging in a secondary battery so as to improve electrical characteristics such as cycle characteristics of the secondary battery.

However, a negative electrode formed using a conventional binder composition such as described above and a secondary battery in which such a negative electrode is used leave room for further improvement in terms of suppressing swelling of the negative electrode in accompaniment to repeated charging and discharging and enhancing cycle characteristics of the secondary battery.

Accordingly, one object of the present disclosure is to provide a binder composition for a non-aqueous secondary battery negative electrode and a slurry composition for a non-aqueous secondary battery negative electrode containing this binder composition for a non-aqueous secondary battery negative electrode that can suppress swelling of a negative electrode in accompaniment to repeated charging and discharging and improve cycle characteristics of a secondary battery.

Another object of the present disclosure is to provide a negative electrode for a non-aqueous secondary battery with which swelling of the negative electrode in accompaniment to repeated charging and discharging is suppressed and that can improve cycle characteristics of a secondary battery.

Yet another object of the present disclosure is to provide a non-aqueous secondary battery in which swelling of a negative electrode in accompaniment to repeated charging and discharging is suppressed and in which electrical characteristics such as cycle characteristics are excellent.

(Solution to Problem)

The inventors conducted diligent studies aimed at solving the problem set forth above. The inventors discovered that in the case of a binder composition containing a particulate polymer that is hydrogenated and is also densely cross-linked in an inner part of the polymer, a synergistic effect of the aforementioned cross-linking and the aforementioned hydrogenation enables good tracking of expansion and contraction of a negative electrode active material in accompaniment to repeated charging and discharging. Moreover, as a result of further studies, the inventors discovered that by providing the particulate polymer with a specific chemical composition and providing the binder composition containing the particulate polymer with a specific property, it is possible to achieve suppression of swelling of a negative electrode in accompaniment to repeated charging and discharging and improvement of cycle characteristics of a secondary battery to high levels. In this manner, the inventors completed the present disclosure.

Specifically, the present disclosure aims to advantageously solve the problem set forth above, and [1] a presently disclosed binder composition for a non-aqueous secondary battery negative electrode comprises a particulate polymer and water, wherein the particulate polymer is formed of a polymer including an ethylenically unsaturated carboxylic acid monomer unit, an aromatic vinyl monomer unit, and an alkylene structural unit, and a binder film formed using the binder composition for a non-aqueous secondary battery negative electrode displays a maximum displacement of 30 μm or less when the binder film is compressed to a maximum load of 20 mN at a loading rate of 0.2975 mN/s using a micro compression tester.

By using, as a binder composition for a negative electrode, a composition that has a specific property and that contains a particulate polymer formed of a polymer including specific monomer units and a specific structural unit in this manner, it is possible to suppress swelling of a negative electrode in accompaniment to repeated charging and discharging and improve cycle characteristics of a secondary battery.

Note that a "monomer unit" of a polymer referred to in the present disclosure is a "repeating unit derived from the monomer that is included in a polymer obtained using the monomer". The "proportional content (mass%)" of each repeating unit in a polymer can be measured by a nuclear magnetic resonance (NMR) method such as $^1$H-NMR.

Moreover, the "maximum displacement" of a "binder film" referred to in the present disclosure can be measured according to a method described in the EXAMPLES section of the present specification.

[2] The binder composition for a non-aqueous secondary battery negative electrode according to the foregoing [1] preferably has a tetrahydrofuran (THF) insoluble content (hereinafter, also referred to as "THF-insoluble content") of 90 mass% or more. When the THF-insoluble content is 90 mass% or more, it is possible to suppress foaming of a slurry composition for a non-aqueous secondary battery negative electrode that is produced using the binder composition for a non-aqueous secondary battery negative electrode.

Note that the "THF-insoluble content" referred to in the present disclosure can be measured by a method described in the EXAMPLES section of the present specification.

[3] The binder composition for a non-aqueous secondary battery negative electrode according to the foregoing [1] or [2] preferably has a degree of swelling in tetrahydrofuran (hereinafter, referred to as a "degree of swelling in THF") of not less than 300 mass% and not more than 1500 mass%. When the degree of swelling in THF is not less than 300 mass% and not more than 1500 mass%, it is possible to sufficiently suppress shedding of a negative electrode active material or the like from a negative electrode current collector.

Note that the "degree of swelling in THF" referred to in the present disclosure can be measured by a method described in the EXAMPLES section of the present specification.

[4] In the binder composition for a non-aqueous secondary battery negative electrode according to any one of the foregoing [1] to [3], the particulate polymer preferably further includes a conjugated diene monomer unit. When the particulate polymer further includes a conjugated diene monomer unit, it is possible to further suppress swelling of a negative electrode in accompaniment to repeated charging and discharging and further improve cycle characteristics of a secondary battery.

[5] In the binder composition for a non-aqueous secondary battery negative electrode according to any one of the foregoing [1] to [4], it is preferable that proportional content of the ethylenically unsaturated carboxylic acid monomer unit in the polymer is not less than 10 mass% and not more than 60 mass%, proportional content of the aromatic vinyl monomer unit in the polymer is not less than 10 mass% and not more than 60 mass%, and total proportional content of the alkylene structural unit and the conjugated diene monomer unit in the polymer is not less than 10 mass% and not more than 80 mass%. When the proportional content of the ethylenically unsaturated carboxylic acid monomer unit, the proportional content of the aromatic vinyl monomer unit, and the total proportional content of the alkylene structural unit and the conjugated diene monomer unit in the polymer that forms the particulate polymer are within the ranges set forth above, it is possible to even further suppress swelling of a negative electrode in accompaniment to repeated charging and discharging and even further improve cycle characteristics of a secondary battery.

[6] In the binder composition for a non-aqueous secondary battery negative electrode according to any one of the foregoing [1] to [5], the alkylene structural unit preferably includes a structural unit obtained through hydrogenation of a butadiene unit. When the alkylene structural unit includes a structural unit obtained through hydrogenation of a butadiene unit, it is possible to yet further suppress swelling of a negative electrode in accompaniment to repeated charging and discharging and yet further improve cycle characteristics of a secondary battery.

Moreover, the present disclosure aims to advantageously solve the problem set forth above, and [7] a presently disclosed slurry composition for a non-aqueous secondary battery negative electrode comprises: a negative electrode active material; and the binder composition for a non-aqueous secondary battery negative electrode according to any one of the foregoing [1] to [6]. By using a slurry composition for a non-aqueous secondary battery negative electrode such as set forth above, it is possible to form a negative electrode with which swelling of the negative electrode in accompaniment to repeated charging and discharging is suppressed, and by using this negative electrode, it is possible to improve cycle characteristics of a secondary battery.

Furthermore, the present disclosure aims to advantageously solve the problem set forth above, and [8] a presently disclosed negative electrode for a non-aqueous secondary battery comprises: a current collector; and a negative electrode mixed material layer located on the current collector, wherein the negative electrode mixed material layer is a layer formed using the slurry composition for a non-aqueous secondary battery negative electrode according to the foregoing [7]. Through a negative electrode for a non-aqueous secondary battery that includes a negative electrode mixed material layer formed using the slurry composition for a secondary battery negative electrode set forth above in this manner, swelling of the negative electrode in accompaniment to charging and discharging is suppressed, and thus it is possible to improve cycle characteristics of a secondary battery by using this negative electrode.

Also, the present disclosure aims to advantageously solve the problem set forth above, and [9] a presently disclosed non-aqueous secondary battery comprises a positive electrode, a negative electrode, a separator, and an electrolyte solution, wherein the negative electrode is the negative electrode for a non-aqueous secondary battery according to the foregoing [8]. Use of the negative electrode for a non-aqueous secondary battery set forth above yields a non-aqueous secondary battery in which swelling of the negative electrode in accompaniment to repeated charging and discharging is suppressed and in which electrical characteristics such as cycle characteristics are excellent.

(Advantageous Effect)

Through the presently disclosed binder composition for a non-aqueous secondary battery negative electrode and slurry composition for a non-aqueous secondary battery negative electrode, it is possible to suppress swelling of a negative electrode in accompaniment to repeated charging and discharging and improve cycle characteristics of a non-aqueous secondary battery.

Moreover, the presently disclosed negative electrode for a non-aqueous secondary battery can improve cycle characteristics of a non-aqueous secondary battery since swelling of the negative electrode in accompaniment to repeated charging and discharging is suppressed.

Furthermore, the presently disclosed non-aqueous secondary battery has excellent electrical characteristics such as cycle characteristics since swelling of a negative electrode therein is suppressed.

DETAILED DESCRIPTION

The following provides a detailed description of embodiments of the present disclosure.

The presently disclosed binder composition for a non-aqueous secondary battery negative electrode is used in production of the presently disclosed slurry composition for a non-aqueous secondary battery negative electrode. Moreover, the presently disclosed slurry composition for a non-aqueous secondary battery negative electrode can be used in formation of a negative electrode of a non-aqueous secondary battery such as a lithium ion secondary battery.

Furthermore, the presently disclosed negative electrode for a non-aqueous secondary battery includes a negative electrode mixed material layer formed from the presently disclosed slurry composition for a non-aqueous secondary battery negative electrode. Also, a feature of the presently disclosed non-aqueous secondary battery is that it includes a negative electrode for a non-aqueous secondary battery formed using the presently disclosed slurry composition for a non-aqueous secondary battery negative electrode.

(Binder composition for non-aqueous secondary battery negative electrode)

The presently disclosed binder composition for a non-aqueous secondary battery negative electrode (hereinafter, also referred to simply as a "binder composition for a negative electrode") contains a particulate polymer and water as a dispersion medium, and optionally further contains other components.

Features of the presently disclosed binder composition for a negative electrode are that the aforementioned particulate polymer is formed of a polymer including an ethylenically unsaturated carboxylic acid monomer unit, an aromatic vinyl monomer unit, and an alkylene structural unit, and that a binder film formed using the binder composition for a negative electrode displays a maximum displacement of 30 μm or less when the binder film is compressed under specific conditions.

Consequently, it is possible to form a negative electrode for a non-aqueous secondary battery with which swelling in accompaniment to repeated charging and discharging is suppressed by using the presently disclosed binder composition for a negative electrode, and it is possible to obtain a secondary battery having excellent cycle characteristics by using this negative electrode for a non-aqueous secondary battery.

The following describes the particulate polymer that is contained in the presently disclosed binder composition for a negative electrode.

<Particulate polymer>

The particulate polymer is a component that in a situation in which the presently disclosed binder composition for a negative electrode is used to form a negative electrode, can hold a component (negative electrode active material) contained in a negative electrode mixed material layer of the obtained negative electrode so as to prevent shedding of the component from a current collector of the negative electrode.

When the particulate polymer is immersed in electrolyte solution, the particulate polymer maintains its particulate form while also absorbing electrolyte solution and swelling, and the particulate polymer binds the negative electrode active material together and binds the negative electrode active material to the current collector so as to prevent shedding of the negative electrode active material and the like from the current collector of the negative electrode. The particulate polymer even binds particles other than the negative electrode active material that are contained in the negative electrode mixed material layer and serves to maintain the strength of the negative electrode mixed material layer.

The particulate polymer that is contained in the presently disclosed binder composition for a negative electrode is formed of a polymer that includes an ethylenically unsaturated carboxylic acid monomer unit, an aromatic vinyl monomer unit, and an alkylene structural unit and that optionally includes monomer units other than the ethylenically unsaturated carboxylic acid monomer unit, the aromatic vinyl monomer unit, and the alkylene structural unit (hereinafter, referred to as "other monomer units").

{Ethylenically unsaturated carboxylic acid monomer unit}

Ethylenically unsaturated carboxylic acid monomers that can form the ethylenically unsaturated carboxylic acid monomer unit typically do not include a hydroxyl group (-OH) other than a hydroxyl group in a carboxyl group.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. One ethylenically unsaturated carboxylic acid monomer may be used individually, or two or more ethylenically unsaturated carboxylic acid monomers may be used in combination in a freely selected ratio.

Examples of ethylenically unsaturated monocarboxylic acids include acrylic acid, methacrylic acid, and crotonic acid.

Examples of derivatives of ethylenically unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids include maleic acid, fumaric acid, and itaconic acid.

Examples of acid anhydrides of ethylenically unsaturated dicarboxylic acids include maleic anhydride, diacrylic anhydride, methylmaleic anhydride, and dimethylmaleic anhydride.

Examples of derivatives of ethylenically unsaturated dicarboxylic acids include methylmaleic acid, phenylmaleic acid, chloromaleic acid, dichloromaleic acid, and fluoromaleic acid.

A monofunctional ethylenically unsaturated carboxylic acid monomer that includes one ethylenically unsaturated bond (C=C) in a molecule is preferable as an ethylenically unsaturated carboxylic acid monomer. Moreover, from a viewpoint of polymerizability, ethylenically unsaturated monocarboxylic acids and ethylenically unsaturated dicarboxylic acids are preferable, acrylic acid, methacrylic acid, and itaconic acid are more preferable, and acrylic acid and methacrylic acid are even more preferable as ethylenically unsaturated carboxylic acid monomers.

The proportion constituted by ethylenically unsaturated carboxylic acid monomer units in the polymer forming the particulate polymer when all repeating units (total of monomer units and structural units) in the polymer forming the particulate polymer are taken to be 100 mass% is preferably 10 mass% or more, and more preferably 15 mass% or more, and is preferably 60 mass% or less, and more preferably 50 mass% or less.

When the proportion constituted by ethylenically unsaturated carboxylic acid monomer units is not less than any of the lower limits set forth above, shedding of a negative electrode active material and the like from a negative electrode current collector can be suppressed, and a negative electrode having even better shedding resistance can be formed. Moreover, when the proportion constituted by ethylenically unsaturated carboxylic acid monomer units is not more than any of the upper limits set forth above, a slurry composition having further suppressed foaming is obtained.

{Aromatic vinyl monomer unit}

Examples of aromatic vinyl monomers that can form the aromatic vinyl monomer unit include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene and derivatives thereof are preferable. One of these aromatic vinyl monomers may be used individually, or two or more of these aromatic vinyl monomers may be used in combination in a freely selected ratio.

The proportion constituted by aromatic vinyl monomer units in the polymer forming the particulate polymer when all repeating units (total of monomer units and structural units) in the polymer are taken to be 100 mass% is preferably 10 mass% or more, more preferably 20 mass% or more, and even more preferably 30 mass% or more, and is preferably 60 mass% or less, more preferably 50 mass% or less, and even more preferably 40 mass% or less. When the proportion constituted by aromatic vinyl monomer units is not less than any of the lower limits set forth above, a negative electrode having even better close adherence is obtained. Moreover, when the proportion constituted by aromatic vinyl monomer units is not more than any of the upper limits set forth above, a negative electrode having excellent flexibility is obtained.

{Alkylene structural unit}

The alkylene structural unit is a repeating unit that is composed of only an alkylene structure represented by a general formula: $-C_nH_{2n}-$ (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which the alkylene structural unit is introduced into the polymer. For example, the following methods (1) and (2) may be used.

(1) A method in which a polymer is produced from a monomer composition containing a conjugated diene monomer and is then hydrogenated to convert a conjugated diene monomer unit to an alkylene structural unit
(2) A method in which a polymer is produced from a monomer composition containing a 1-olefin monomer (for example, ethylene, propylene, 1-butene, or 1-hexene)

Of these methods, method (1) is preferable in terms of ease of production of the polymer.

The conjugated diene monomer that is used in method (1) may be a conjugated diene compound having a carbon number of 4 or more such as 1,3-butadiene, isoprene, 2,3-dimethyl-1,3-butadiene, 2-ethyl-1,3-butadiene, or 1,3-pentadiene, for example. Of these conjugated diene monomers, 1,3-butadiene is preferable. In other words, the alkylene structural unit is preferably a structural unit obtained through hydrogenation of a conjugated diene monomer unit (i.e., a hydrogenated conjugated diene unit), more preferably a structural unit obtained through hydrogenation of a butadiene unit (i.e., a hydrogenated butadiene unit), and even more preferably a structural unit obtained through hydrogenation of a 1,3-butadiene unit (i.e., a hydrogenated 1,3-butadiene unit). When the alkylene structural unit includes a structural unit obtained through hydrogenation of a butadiene unit, binding capacity of the particulate polymer inside of a non-aqueous secondary battery can be increased.

Selective hydrogenation of a conjugated diene monomer unit can be carried out by a commonly known method such as an oil-layer hydrogenation method or a water-layer hydrogenation method, for example.

The 1-olefin monomer that is used in method (2) may be ethylene, propylene, 1-butene, 1-hexene, or the like, for example.

One of the above-described conjugated diene monomers or 1-olefin monomers can be used individually, or two or more of the above-described conjugated diene monomers or 1-olefin monomers can be used in combination.

The particulate polymer preferably further includes a conjugated diene monomer unit in addition to the alkylene structural unit.

The total proportional content of alkylene structural units and conjugated diene monomer units in the polymer forming the particulate polymer when all repeating units (total of monomer units and structural units) in the polymer are taken to be 100 mass% is preferably 10 mass% or more, more preferably 15 mass% or more, even more preferably 20 mass% or more, and particularly preferably 30 mass% or more, and is preferably 80 mass% or less, more preferably 70 mass% or less, even more preferably 60 mass% or less, and particularly preferably 50 mass% or less. When the total proportional content of alkylene structural units and conjugated diene monomer units is within any of the ranges set forth above, swelling of a negative electrode in accompaniment to repeated charging and discharging can be even further suppressed.

{Other monomer units}

The particulate polymer may include other monomer units in addition to the above-described ethylenically unsaturated carboxylic acid monomer unit, aromatic vinyl monomer unit, and alkylene structural unit to the extent that the object of the present disclosure is not lost. Examples of other monomer units include repeating units derived from known monomers that are copolymerizable with an ethylenically unsaturated carboxylic acid monomer, an aromatic vinyl monomer, and a conjugated diene monomer such as described above without any specific limitations.

{Production method of particulate polymer}

No specific limitations are placed on the method by which the particulate polymer is produced. For example, the particulate polymer can be produced by polymerizing a monomer composition containing the above-described monomers, optionally in the presence of a chain transfer agent, to obtain a polymer precursor, and subsequently hydrogenating the obtained polymer precursor.

Although no specific limitations are placed on the method of polymerization, from a viewpoint of densely cross-linking an inner part of the polymer forming the particulate polymer and even further suppressing swelling of a negative electrode in accompaniment to repeated charging and discharging, it is preferable that a polymer precursor is obtained in the form of a latex by emulsion polymerization and that the obtained polymer precursor is subsequently hydrogenated. The emulsion polymerization can be carried out by a standard method. Moreover, seeded polymerization using seed particles may be adopted in the emulsion polymerization.

Note that the proportional content of each monomer in the monomer composition that is used to produce the particulate polymer can be set in accordance with the proportional content of each monomer unit (repeating unit) in the polymer forming the particulate polymer.

It is preferable that a chain transfer agent (molecular weight modifier) is contained in the polymerization system during the polymerization reaction.

Examples of chain transfer agents that may be used include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene; thiuram compounds such as tetramethyl thiuram disulfide, tetraethylthiuram disulfide, and tetramethylthiuram monosulfide; phenolic compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; thio compounds such as thioglycolic acid, thiomalic acid, and 2-ethylhexyl thioglycolate; diphenylethylene; and $\alpha$-methylstyrene dimer. Of these chain transfer agents, t-dodecyl mercaptan is preferable.

One of the above-described chain transfer agents may be used individually, or two or more of the above-described chain transfer agents may be used in combination in a freely selected ratio.

The used amount of the chain transfer agent is preferably 0.03 parts by mass or more, more preferably 0.1 parts by mass or more, and even more preferably 0.3 parts by mass or more relative to 100 parts by mass of the used amount of monomers, and is preferably 2.0 parts by mass or less, more preferably 1.8 parts by mass or less, even more preferably 1.0 parts by mass or less, and particularly preferably 0.8 parts by mass or less relative to 100 parts by mass of the used amount of monomers. When the used amount of the chain transfer agent is within any of the ranges set forth above, an inner part of the polymer forming the particulate polymer can be even more densely cross-linked, and swelling of a negative electrode in accompaniment to repeated charging and discharging can be even further suppressed.

Besides the chain transfer agent, typically used additives such as emulsifiers, dispersants, polymerization initiators, and polymerization aids can also be used in the polymerization reaction. The used amounts of these additives can be set as typically used amounts.

The maximum temperature during the polymerization reaction is preferably higher than 80°C, and more preferably 85°C or higher, and is preferably lower than 100°C, and more preferably 95°C or lower. When the maximum temperature is within any of the ranges set forth above, the polymer forming the particulate polymer can be yet further densely cross-linked, and swelling of a negative electrode in accompaniment to repeated charging and discharging can be yet further suppressed.

The duration of a temperature exceeding 80°C in the polymerization reaction is preferably 1 hour or more, more preferably 2 hours or more, and even more preferably 3 hours or more, and is preferably 7 hours or less, more preferably 6 hours or less, and even more preferably 5 hours or less. This temperature may be 85°C or higher, may be lower than 100°C, or may be 95°C or lower. When the duration of a temperature exceeding 80°C is within any of the ranges set forth above, an inner part of the particulate polymer can be yet further densely cross-linked, and swelling of a negative electrode in accompaniment to repeated charging and discharging can be yet further suppressed.

<Solvent>

The presently disclosed binder composition for a negative electrode is required to contain water as a solvent and may contain a small amount of an organic solvent in addition to the water.

<Other components>

The presently disclosed binder composition for a negative electrode may contain components other than the above-described components (i.e., may contain other components) to the extent that the object of the present disclosure is not lost. Examples of such other components include antioxidants, defoamers, and dispersants.

One other component may be used individually, or two or more other components may be used in combination in a freely selected ratio.

<Production method of binder composition for non-aqueous secondary battery negative electrode>

The presently disclosed binder composition for a negative electrode can be produced by mixing the particulate polymer and other components that are optionally used in the presence of water without any specific limitations. Note that in a situation in which a dispersion liquid of the particulate polymer is used in production of the binder composition, liquid content of this dispersion liquid may be used in that form as a medium of the binder composition for a negative electrode.

<Properties of binder composition for non-aqueous secondary battery negative electrode>

The maximum displacement displayed by a binder film formed using the presently disclosed binder composition for a negative electrode when the binder film is compressed to a maximum load of 20 mN at a loading rate of 0.2975 mN/s is 30 μm or less, preferably 25 μm or less, and even more preferably 15 μm or less. When the maximum displacement of the binder film is 30 μm or less, swelling of a negative electrode due to repeated charging and discharging and shedding of a negative electrode active material and the like from a negative electrode current collector can be sufficiently suppressed, and cycle characteristics of a secondary battery can be sufficiently enhanced.

Note that the maximum displacement of the binder film can be adjusted through the amounts of a chain transfer agent and monomers that are used in production of the polymer forming the particulate polymer, the conditions of polymerization and hydrogenation, and so forth.

Moreover, the tetrahydrofuran (THF) insoluble content of the presently disclosed binder composition for a negative electrode is preferably 90 mass% or more, and more preferably 95 mass% or more. When the THF-insoluble content is 90 mass% or more, a slurry composition for a negative electrode having suppressed foaming can be produced by using the binder composition for a negative electrode.

Furthermore, the degree of swelling in tetrahydrofuran (THF) of the presently disclosed binder composition for a negative electrode is preferably 300 mass% or more, more preferably 400 mass% or more, and even more preferably 600 mass% or more, and is preferably 1,500 mass% or less, more preferably 1,200 mass% or less, and even more preferably 1,000 mass% or less. When the degree of swelling in THF is within any of the ranges set forth above, shedding of a negative electrode active material and the like from a negative electrode mixed material layer can be yet further suppressed, and cycle characteristics of a secondary battery can be yet further enhanced.

Note that the THF-insoluble content and degree of swelling in THF can be adjusted through the amounts of a chain transfer agent and monomers that are used in production of the polymer forming the particulate polymer, the conditions of polymerization and hydrogenation, and so forth.

(Slurry composition for non-aqueous secondary battery negative electrode)

The presently disclosed slurry composition for a non-aqueous secondary battery negative electrode (hereinafter, also referred to simply as a "slurry composition for a negative electrode") is an aqueous slurry composition that contains a negative electrode active material and the binder composition for a negative electrode set forth above. The presently disclosed slurry composition for a negative electrode may contain other components that are subsequently described in addition to the negative electrode active material and the binder composition for a negative electrode.

As a result of the presently disclosed slurry composition for a negative electrode containing the presently disclosed binder composition for a negative electrode, this slurry composition for a negative electrode can be used to form a negative electrode with which swelling of the negative electrode in accompaniment to repeated charging and discharging is suppressed and that can cause a secondary battery to display excellent cycle characteristics.

<Negative electrode active material>

The negative electrode active material is a material that gives and receives electrons in a negative electrode of a secondary battery. The following description takes a negative electrode active material that is used in a negative electrode of a lithium ion secondary battery as an example.

A material that can occlude and release lithium is normally used as a negative electrode active material of a lithium ion secondary battery. The material that can occlude and release lithium may be a carbon-based negative electrode active material, a metal-based negative electrode active material, or a negative electrode active material that is a combination thereof, for example.

[Carbon-based negative electrode active material]

The carbon-based negative electrode active material can be defined as an active material that contains carbon as its main framework and into which lithium can be inserted (also referred to as "doping"). The carbon-based negative electrode active material may be a carbonaceous material or a graphitic material, for example.

A carbonaceous material is a material with a low degree of graphitization (i.e., low crystallinity) that can be obtained by carbonizing a carbon precursor by heat treatment at 2000°C or lower. The lower limit of the heat treatment temperature in the carbonization is not specifically limited and can be set as 500°C or higher, for example.

Examples of the carbonaceous material include graphitizing carbon whose carbon structure can easily be changed according to the heat treatment temperature and non-graphitizing carbon typified by glassy carbon, which has a structure similar to an amorphous structure.

The graphitizing carbon may be a carbon material made using tar pitch obtained from petroleum or coal as a raw material, for example. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material is a material having high crystallinity of a similar level to graphite. The graphitic material can be obtained by heat-treating graphitizing carbon at 2000°C or higher. The upper limit of the heat treatment temperature is not specifically limited and can be set as 5000°C or lower, for example.

Examples of the graphitic material include natural graphite, artificial graphite, and the like.

Examples of the artificial graphite include artificial graphite obtained by heat-treating carbon containing graphitizing carbon mainly at 2500°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, and phosphides of any of the preceding examples.

Of these metal-based negative electrode active materials, active materials containing silicon (silicon-based negative electrode active materials) are preferred. One reason for this is that the capacity of a lithium ion secondary battery can be increased through use of a silicon-based negative electrode active material.

The silicon-based negative electrode active material may be silicon (Si), an alloy of silicon with cobalt, nickel, iron, or the like, $SiO_x$, a mixture of a Si-containing material and a carbon material, or a composite of a Si-containing material and conductive carbon obtained by coating or combining the Si-containing material with the conductive carbon, for example.

$SiO_x$ is a compound that includes Si and at least one of SiO and $SiO_2$, where x is normally not less than 0.01 and less than 2. $SiO_x$ can, for example, be formed by utilizing a disproportionation reaction of silicon monoxide (SiO). Specifically, $SiO_x$ can be prepared by heat-treating SiO, optionally in the presence of a polymer such as polyvinyl alcohol, to produce silicon and silicon dioxide. The heat treatment can be performed in an inert gas atmosphere after SiO is optionally pulverized and mixed with the polymer.

The mixture of a Si-containing material and a carbon material may be a mixture obtained by pulverizing and mixing a Si-containing material such as silicon or $SiO_x$ with a carbon material such as a carbonaceous material or a graphitic material, optionally in the presence of a polymer such as polyvinyl alcohol. Any of the materials that can be used as a carbon-based negative electrode active material may be used as the carbonaceous material or graphitic material.

The composite of a Si-containing material and conductive carbon may, for example, be a compound obtained by heat-treating a pulverized mixture of SiO, a polymer such as polyvinyl alcohol, and optionally a carbon material in an inert gas atmosphere, for example. In a situation in which a high temperature is adopted in the heat treatment of the pulverized mixture, this produces a composite (Si-$SiO_x$-C composite) in which $SiO_x$ produced through a disproportionation reaction of SiO is dispersed in a matrix of conductive carbon formed of the carbonized polymer and the optionally compounded carbon material. Moreover, in a situation in which a comparatively low temperature is adopted in the heat treatment of the pulverized mixture, this produces a composite (SiO-C) in which Si in SiO has been partially replaced by conductive carbon.

In a case in which a silicon-based negative electrode active material is used, it is preferable to use a mixture of a carbon-based negative electrode active material and a silicon-based negative electrode active material as the negative electrode active material from a viewpoint of sufficiently suppressing the occurrence of swelling of a negative electrode in accompaniment to repeated charging and discharging while also increasing the capacity of a lithium ion secondary battery.

In a case in which a mixture of a carbon-based negative electrode active material and a silicon-based negative electrode active material is used as the negative electrode active material, it is preferable to use artificial graphite as the carbon-based negative electrode active material, and it is preferable to use one or more selected from the group consisting of Si, $SiO_x$, a mixture of a Si-containing material and a carbon material, and a composite of a Si-containing material and conductive carbon as the silicon-based negative electrode active material, more preferable to use a composite of a Si-containing material and conductive carbon as the silicon-based negative electrode active material, and even more preferable to use a composite (Si-$SiO_x$-C composite) in which $SiO_x$ is dispersed in a matrix of conductive carbon from a viewpoint of sufficiently suppressing the occurrence of swelling of a negative electrode while also sufficiently increasing the capacity of a lithium ion secondary battery. These negative electrode active materials are capable of occluding and releasing relatively large amounts of lithium, but display comparatively small volume changes during occlusion and release of lithium. Accordingly, the use of these negative electrode active materials can restrict an increase of volume change of the negative electrode active material during charging and discharging while also sufficiently increasing the capacity of a lithium ion secondary battery in which a negative electrode for a lithium ion secondary battery formed using the slurry composition for a negative electrode is adopted.

Moreover, in a case in which a mixture of a carbon-based negative electrode active material and a silicon-based negative electrode active material is used as the negative electrode active material, the negative electrode active material preferably includes 1 part by mass to 100 parts by mass of the silicon-based negative electrode active material, more preferably includes 1 part by mass to 15 parts by mass of the silicon-based negative electrode active material, and particularly preferably includes 1 part by mass to 6 parts by mass of the silicon-based negative electrode active material per 100 parts by mass of the carbon-based negative electrode active material from a viewpoint of sufficiently suppressing the occurrence of swelling of a negative electrode while also sufficiently increasing the capacity of a lithium ion secondary battery. By setting the amount of the silicon-based negative electrode active material as 1 part by mass or more per 100 parts by mass of the carbon-based negative electrode active material, it is possible to sufficiently increase the capacity of a lithium ion secondary battery. Moreover, by setting the amount of the silicon-based negative electrode active material as 100 parts by mass or less per 100 parts by mass of the carbon-based negative electrode active material, it is possible to sufficiently suppress the occurrence of swelling of a negative electrode. Note that the particle diameter and specific surface area of the negative electrode active material can be the same as those of a conventionally used negative electrode active material without any specific limitations.

<Binder composition for negative electrode>

The binder composition for a negative electrode that is used in the presently disclosed slurry composition for a negative electrode is the presently disclosed binder composition for a negative electrode that contains the previously described particulate polymer and water.

The presently disclosed slurry composition for a negative electrode preferably contains 0.1 parts by mass or more, more preferably contains 0.5 parts by mass or more, and even more preferably contains 1 part by mass or more of the particulate polymer per 100 parts by mass of the negative electrode active material, and preferably contains 20 parts by mass or less, more preferably contains 10 parts by mass or less, and even more preferably contains 5 parts by mass or less of the particulate polymer per 100 parts by mass of the negative electrode active material. When the content of the particulate polymer in the slurry composition for a negative electrode is within any of the ranges set forth above, the amount of the particulate polymer is sufficient for suitably tracking expansion and contraction of the negative electrode active material, and a lithium ion secondary battery can be provided with even better cycle characteristics.

<Other components>

Besides the components described above, the presently disclosed slurry composition for a negative electrode may contain components such as water-soluble polymers (for example, carboxymethyl cellulose and polyacrylic acid), conductive materials, reinforcing materials, leveling agents, and additives for electrolyte solution. These other components are not specifically limited so long as they do not affect battery reactions and can be selected from commonly known components such as those described in WO2012/115096A1. One of these components may be used individually, or two or more of these components may be used in combination in a freely selected ratio. Moreover, such other components may be contained in the presently disclosed slurry composition for a negative electrode as a result of these components being compounded in the presently disclosed binder composition that is used.

<Production method of slurry composition for non-aqueous secondary battery negative electrode>

No specific limitations are placed on the method by which the presently disclosed slurry composition for a negative electrode is produced. For example, the presently disclosed slurry composition for a negative electrode can be produced by mixing the above-described negative electrode active material, binder composition for a negative electrode, and other components that are used as necessary in the presence of water.

Note that a medium that is used in production of the slurry composition for a negative electrode is inclusive of a medium that was contained in the binder composition for a negative electrode. The mixing method is not specifically limited and can be mixing using a typically used stirrer or disperser.

(Negative electrode for non-aqueous secondary battery)

The presently disclosed negative electrode for a non-aqueous secondary battery (hereinafter, also referred to as simply a "negative electrode") includes a current collector and a negative electrode mixed material layer located on the current collector, wherein the negative electrode mixed material layer is a layer formed using the slurry composition for a negative electrode set forth above. As a result of the presently disclosed negative electrode including a negative electrode mixed material layer in which the presently disclosed slurry composition for a negative electrode is used, swelling of the negative electrode in accompaniment to repeated charging and discharging is suppressed, and the negative electrode can cause a secondary battery to display excellent cycle characteristics.

<Negative electrode mixed material layer>

The negative electrode mixed material layer is formed of a dried product of the presently disclosed slurry composition for a negative electrode, normally contains a negative electrode active material and a component derived from a particulate polymer, and can optionally further contain other components. Note that components contained in the negative electrode mixed material layer are components that were contained in the presently disclosed slurry composition for a negative electrode and that the preferred ratio of these components is the same as the preferred ratio of the components in the slurry composition for a negative electrode. Also note that although the particulate polymer is present in a particulate form in the binder composition for a negative electrode and the slurry composition for a negative electrode, the particulate polymer may have a particulate form or may have any other form in the negative electrode mixed material layer that is formed using the slurry composition for a negative electrode.

<Current collector>

The current collector of the negative electrode is a material having electrical conductivity and electrochemical durability. Specifically, the current collector may, for example, be made of iron, copper, aluminum, nickel, stainless steel, titanium, tantalum, gold, platinum, or the like. Copper foil is particularly preferable as the current collector of the negative electrode. One of these materials may be used individually, or two or more of these materials may be used in combination in a freely selected ratio.

<Production method of negative electrode>

The presently disclosed negative electrode can be produced, for example, through a step of applying the slurry composition for a negative electrode set forth above onto the current collector (application step) and a step of drying the slurry composition for a negative electrode that has been applied onto the current collector to form a negative electrode mixed material layer on the current collector (drying step).

[Application step]

The slurry composition for a negative electrode can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition for a negative electrode may be applied onto just one side or both sides of the current collector. The thickness of the slurry coating on the current collector after application but before drying can be set as appropriate in accordance with the thickness of the negative electrode mixed material layer to be obtained after drying.
The current collector onto which the slurry composition for a negative electrode is applied is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as the current collector used in the negative electrode. One of these materials may be used individually, or two or more of these materials may be used in combination in a freely selected ratio.

[Drying step]

The slurry composition for a negative electrode on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition for a negative electrode on the current collector in this manner, it is possible to form a negative electrode mixed material layer on the current collector and thereby obtain a negative electrode for a lithium ion secondary battery including the current collector and the negative electrode mixed material layer.
After the drying step, the negative electrode mixed material layer may be further subjected to a pressing process such as mold pressing or roll pressing. The pressing process can improve close adherence between the negative electrode mixed material layer and the current collector.

(Non-aqueous secondary battery)

The presently disclosed non-aqueous secondary battery includes a positive electrode, a negative electrode, a separator, and an electrolyte solution. As a result of the presently disclosed non-aqueous secondary battery including the presently disclosed negative electrode as the negative electrode, the secondary battery can be caused to display excellent cycle characteristics.
Although the following describes, as one example, a case in which the secondary battery is a lithium ion secondary battery, the presently disclosed secondary battery is not limited to the following example.

<Positive electrode>

The positive electrode may be any known positive electrode that is used as a positive electrode for a secondary battery. Specifically, the positive electrode may be a positive electrode obtained by forming a positive electrode mixed material layer on a current collector, for example.
The current collector may be made of a metal material such as aluminum. The positive electrode mixed material layer may be a layer containing a known positive electrode active material, conductive material, and binder.

<Separator>

The separator may be a separator such as described in JP2012-204303A, for example, without any specific limitations. Of these separators, a microporous membrane made of polyolefinic resin (polyethylene, polypropylene, polybutene, or polyvinyl chloride) is preferable because such a membrane can reduce the total thickness of the separator, which increases the ratio of electrode active material inside the secondary battery, and consequently increases the volumetric capacity.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)_2NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives can be added to the electrolyte solution.

<Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that the negative electrode set forth above is used in the presently disclosed secondary battery. The presently disclosed secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Furthermore, in the case of a hydrogenated polymer that is obtained through hydrogenation of a polymer including conjugated diene monomer units, the total proportional content of conjugated diene monomer units that have not yet been hydrogenated and alkylene structural units that are hydrogenated conjugated diene monomer units in the hydrogenated polymer is the same as the ratio (charging ratio) of a conjugated diene monomer among all monomers used in polymerization of the polymer.

Various measurements and evaluations in the examples and comparative examples were performed as described below.

<Tetrahydrofuran (THF) insoluble content>

A binder composition for a negative electrode produced in each example or comparative example was dripped into a petri dish such that there was 1.5 g of solid content. Next, 24 hours of drying was performed in a 22°C to 25°C environment, and then a further 1 hour of drying was performed at 110°C to obtain a film. The obtained film was cut to obtain a film piece, and the mass (w0) of the film piece was measured. The film piece was immersed in 75 mL of tetrahydrofuran (THF) at 25°C for 24 hours. Thereafter, the film piece was pulled out of the THF and was vacuum dried at 105°C for 3 hours. The mass (w1) of this film piece was measured. The THF-insoluble content (mass%) was calculated according to the following formula.

$$\text{THF-insoluble content (mass\%)} = (w1/w0) \times 100$$

<Degree of swelling in tetrahydrofuran (THF)>

A binder composition for a negative electrode produced in each example or comparative example was dripped into a petri dish such that there was 1.5 g of solid content. Next, 24 hours of drying was performed in a 22°C to 25°C environment, and then a further 1 hour of drying was performed at 110°C to obtain a film. The obtained film was cut to obtain a film piece, and the mass (w0) of the film piece was measured. The film piece was immersed in 75 mL of tetrahydrofuran (THF) at 25°C for 24 hours. After immersion, the film piece was pulled out of the THF and was left at rest under draft for 1 minute. The mass (w1) of the film piece was subsequently measured. The degree of swelling (mass%) in THF was calculated according to the following formula.

$$\text{Degree of swelling in THF (mass\%)} = (w1/w0) \times 100$$

<Maximum displacement of binder film>

A binder composition for a negative electrode produced in each example or comparative example was dripped into a petri dish such that there was 4.0 g of solid content. Next, 24 hours of drying was performed in a 22°C to 25°C environment, and then a further 10 hours of drying was performed at 140°C to obtain a binder film of 500 $\mu$m in thickness. The obtained binder film was subsequently subjected to a micro compression test using a micro compression tester (MCT-W500 produced by Shimadzu Corporation). Specifically, a truncated cone indenter (cone angle: 120°; indenter tip diameter: 200 $\mu$m) was brought into contact with the surface of the binder film, was used to compress the binder film in a thickness direction to a maximum load of 20 mN at a loading rate of 0.2975 mN/s, and was subsequently unloaded. The displacement at a point at which the binder film and the indenter came into contact was taken to be a zero point, and a load-displacement curve was prepared with displacement plotted on the horizontal axis and load plotted on the vertical axis. The displacement upon compression to 20 mN (maximum load) was read from the curve as the maximum displacement. A smaller maximum displacement for the binder film indicates that suppression of swelling of a negative electrode in accompaniment to repeated charging and discharging and suppression of shedding of a negative electrode active material and the like from a negative electrode mixed material layer are achieved to higher levels.

<Foaming of slurry composition for negative electrode>

A slurry composition for a negative electrode produced in each example or comparative example was loaded, in an amount of 100 g, into a vessel having an internal diameter of 6 cm and was stirred at 2,000 rpm for 5 minutes using a disper having a sawtooth disc turbine blade of 3 cm in diameter attached thereto. Thereafter, the slurry composition for a negative electrode was loaded into a case compatible with pressurization, the internal pressure of the case was set to 0.1 MPa with nitrogen gas, and this state was maintained for 3 minutes. The slurry composition for a negative electrode was removed from the case, and then a ×20 magnifying glass was used to count the number of bubbles of 0.1 mm or more in diameter that were present at the liquid surface of the slurry composition for a negative electrode.
A smaller number of bubbles indicates that foaming of the slurry composition for a negative electrode is suppressed.

A: Number of bubbles is 1 or less
B: Number of bubbles is not less than 2 and less than 6
C: Number of bubbles is not less than 6 and less than 10

<Swelling of negative electrode>

A lithium ion secondary battery produced in each example or comparative example was left at rest in an environment having a temperature of 25°C for 5 hours in a state in which the electrodes were immersed in electrolyte solution. Next, the secondary battery that had been left at rest was charged to a cell voltage of 3.65 V by a constant-current method with a rate of 0.2C in an environment having a temperature of 25°C. The charged lithium ion secondary battery was subsequently subjected to 12 hours of aging in an environment having a temperature of 60°C. The lithium ion secondary battery that had been subjected to aging was then discharged to a cell voltage of 3.00 V by a constant-current method with a rate of 0.2C in an environment having a temperature of 25°C. The discharged lithium ion secondary battery was disassembled, and a value obtained by subtracting the thickness of the current collector from the thickness of the overall negative electrode was taken to be the pre-cycling negative electrode thickness (d0).

Next, the lithium ion secondary battery was reassembled, and the reassembled lithium ion secondary battery was subjected to 50 cycles of a charge/discharge operation under conditions of a cell voltage of 4.20 V to 3.00 V and a charge/discharge rate of 1C in an environment having a temperature of 25°C. Finally, the lithium ion secondary battery that had been subjected to 50 cycles of the charge/discharge operation was charged at a rate of 1C in an environment having a temperature of 25°C. The lithium ion secondary battery in the charged state was disassembled to take out the negative electrode, and a value obtained by subtracting the thickness of the current collector from the thickness of the overall negative electrode was taken to be the post-cycling negative electrode thickness (d1). A rate of change of the post-cycling negative electrode thickness (d1) relative to the pre-cycling negative electrode thickness (d0) was calculated as the post-cycling swelling of the negative electrode (= {(d1 - d0)/d0} × 100(%)), and the swelling of the negative electrode was evaluated by the following standard. Less post-cycling swelling of the negative electrode indicates that the structure of the negative electrode mixed material layer is maintained even upon repeated charge/discharge cycling and that the lithium ion secondary battery has long service life.

A: Post-cycling negative electrode swelling of less than 25%
B: Post-cycling negative electrode swelling of not less than 25% and less than 30%
C: Post-cycling negative electrode swelling of not less than 30% and less than 35%
D: Post-cycling negative electrode swelling of 35% or more

<Shedding resistance>

A lithium ion secondary battery produced in each example or comparative example was left at rest at a temperature of 25°C for 6 hours after injection of electrolyte solution. Next, the lithium ion secondary battery was charged to a cell voltage of 3.65 V by a 0.1C constant-current method at a temperature of 25°C and was then subjected to 12 hours of aging at a temperature of 60°C. Thereafter, the lithium ion secondary battery was charged to 4.2 V at 0.2C and discharged to 3.0 V at 0.2C, and the cell was disassembled in this state to remove the negative electrode. The removed negative electrode was washed with diethyl carbonate, and then the surface of the negative electrode was visually observed and was evaluated by the following standard. Less cracking or peeling of the surface of the negative electrode indicates that shedding of a negative electrode active material and the like from the negative electrode current collector is suppressed and that the negative electrode has excellent shedding resistance.

A: Cracking/peeling observed over not less than 0% and less than 10% of area of overall negative electrode surface
B: Cracking/peeling observed over not less than 10% and less than 15% of area of overall negative electrode surface
C: Cracking/peeling observed over not less than 15% and less than 25% of area of overall negative electrode surface
D: Cracking/peeling observed over 25% or more of area of overall negative electrode surface

<Cycle characteristics>

A lithium ion secondary battery produced in each example or comparative example was used to evaluate cycle characteristics.

Specifically, the lithium ion secondary battery was first subjected to injection of electrolyte solution, aging, and conditioning. Thereafter, the lithium ion secondary battery was subjected to a charge/discharge operation of charging to a cell voltage of 4.20 V and discharging to a cell voltage of 2.75 V by a 0.5C constant-current method in an environment having a temperature of 25°C, and the initial capacity C0 was measured. This charging and discharging was further repeated, and the capacity C1 after 50 cycles was measured. A capacity maintenance rate C2 was calculated according to the following formula.

$$C2(\%) = (C1/C0) \times 100$$

A larger value for the capacity maintenance rate C2 indicates that the lithium ion secondary battery has better cycle characteristics.

A: Capacity maintenance rate C2 of 90% or more
B: Capacity maintenance rate C2 of not less than 85% and less than 90%
C: Capacity maintenance rate C2 of not less than 80% and less than 85%
D: Capacity maintenance rate C2 of less than 80%

(Example 1)

<Production of binder composition for negative electrode>

{Production of polymer precursor}

A 5 MPa pressure-resistant vessel A equipped with a stirrer was charged with 0.1 parts of methacrylic acid as an ethylenically unsaturated carboxylic acid monomer, 2.1 parts of styrene as an aromatic vinyl monomer, 3.4 parts of 1,3-butadiene as a conjugated diene monomer, 0.23 parts of sodium dodecyl diphenyl ether disulfonate as an emulsifier, 15 parts of deionized water, and 0.017 parts of potassium persulfate as a polymerization initiator to obtain a mixture A. The mixture A was thoroughly stirred, was then heated to 57°C to initiate polymerization, and was caused to react for 5 hours. Thereafter, the temperature was set to 70°C, and a further 4 hours of reaction was performed to yield seed particles.

Separately to the above, a 5 MPa pressure-resistant vessel B equipped with a stirrer was charged with 18.9 parts of acrylic acid as an ethylenically unsaturated carboxylic acid monomer, 31.5 parts of styrene as an aromatic vinyl monomer, 44 parts of 1,3-butadiene as a conjugated diene monomer, 0.5 parts of t-dodecyl mercaptan as a chain transfer agent, 0.20 parts of sodium lauryl sulfate as an emulsifier, and 44 parts of deionized water to obtain a mixture B.

The contents of the pressure-resistant vessel A after the seed particles had been obtained were heated to a temperature of 75°C, and the mixture B was added into the pressure-resistant vessel A over 5 hours. Simultaneously thereto, addition of 0.5 parts of potassium persulfate as a polymerization initiator into the pressure-resistant vessel A was initiated so as to initiate polymerization. Note that the overall monomer composition was composed of 0.1 parts of methacrylic acid and 18.9 parts of acrylic acid as ethylenically unsaturated carboxylic acid monomers, 33.6 parts of styrene as an aromatic vinyl monomer, and 47.4 parts of 1,3-butadiene as a conjugated diene monomer.

Once addition of the total amount of the mixture B was complete, the temperature was raised to 90°C and a reaction was performed for 4 hours.

At the point at which the polymerization conversion rate reached 97%, cooling was performed to quench the reaction to yield a mixture containing a polymer. Next, the obtained mixture was adjusted to pH 8 through addition of 5% sodium hydroxide aqueous solution. Unreacted monomer was subsequently removed through thermal-vacuum distillation. Cooling was subsequently performed to yield a polymer precursor.

{Hydrogenation reaction of polymer precursor}

Next, water was added to the obtained polymer precursor so as to produce 400 mL (total solid content: 48 g) of a polymer solution having a total solid content concentration of 12%. This polymer solution was loaded into a 1 L autoclave equipped with a stirrer, and dissolved oxygen in the polymer solution was removed through 10 minutes of ventilation with nitrogen gas. Thereafter, 75 mg of palladium acetate as a hydrogenation reaction catalyst was dissolved in 180 mL of water to which 4 molar equivalents of nitric acid relative to Pd had been added and was added into the autoclave. After purging the system twice with hydrogen gas, the contents of the autoclave were heated to 50°C in a state in which the pressure was raised to 3 MPa with hydrogen gas, and a hydrogenation reaction (first stage hydrogenation reaction) was carried out for 6 hours.

Next, the autoclave was restored to atmospheric pressure, and a further 25 mg of palladium acetate as a hydrogenation reaction catalyst was dissolved in 60 mL of water to which 4 molar equivalents of nitric acid relative to Pd had been added and was added into the autoclave. After purging the system twice with hydrogen gas, the contents of the autoclave were heated to 50°C in a state in which the pressure was raised to 3 MPa with hydrogen gas, and a hydrogenation reaction (second stage hydrogenation reaction) was carried out for 6 hours. This yielded a binder composition for a negative electrode containing a target particulate polymer.

The obtained binder composition for a negative electrode was used to determine the THF-insoluble content, the degree of swelling in THF, and the maximum displacement of a binder film. The results are shown in Table 1.

<Production of slurry composition for negative electrode>

A planetary mixer equipped with a disper was charged with 90.2 parts of artificial graphite as a carbon-based negative electrode active material, 6.8 parts of $SiO_x$ as a silicon-based negative electrode active material, and 2.0 parts (in terms of solid content) of sodium carboxymethyl cellulose aqueous solution. These materials were adjusted to a solid content concentration of 61.5% through addition of deionized water and were subsequently mixed at room temperature for 40 minutes. Next, the solid content concentration was adjusted stepwise to 56% and 51% with deionized water, and then 1.0 parts (in terms of solid content) of the binder composition for a negative electrode obtained as described above was added to obtain a mixture. The obtained mixture was subjected to defoaming under reduced pressure to obtain a slurry composition for a negative electrode having good fluidity.
The obtained slurry composition for a negative electrode was used to evaluate foaming of the slurry composition for a negative electrode. The result is shown in Table 1.

<Production of negative electrode>

The slurry composition for a negative electrode described above was applied onto copper foil (current collector) of 16 $\mu$m in thickness by a comma coater such as to having a coating weight after drying of 10 mg/cm$^2$. Next, the copper foil with the slurry composition for a negative electrode applied thereon was conveyed inside an oven having a temperature of 75°C for 2 minutes and inside an oven having a temperature of 120°C for 2 minutes at a speed of 0.5 m/min so as to dry the slurry composition for a negative electrode on the copper foil and obtain a negative electrode web having a negative electrode mixed material layer formed on the copper foil. Next, the negative electrode web was rolled by roll pressing to obtain a negative electrode having a negative electrode mixed material layer thickness of 80 $\mu$m.

<Production of positive electrode>

A slurry composition for a positive electrode was obtained by loading 96 parts of lithium nickel manganese cobalt oxide as a positive electrode active material, 2 parts in terms of solid content of PVDF (polyvinylidene fluoride) as a binder composition for a positive electrode, 2 parts of acetylene black as a conductive material, and 20 parts of N-methylpyrrolidone as a solvent into a planetary mixer and mixing these materials.
The obtained slurry composition for a positive electrode was applied onto aluminum foil (current collector) of 16 $\mu$m in thickness by a comma coater such as to have a coating weight after drying of 24.5 mg/cm$^2$. Next, the aluminum foil having the slurry composition for a positive electrode applied thereon was conveyed inside an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web having a positive electrode mixed material layer formed on the aluminum foil. Next, the positive electrode web was rolled by roll pressing to obtain a positive electrode having a positive electrode mixed material layer thickness of 70 $\mu$m.

<Preparation of separator>

A separator made of a single layer of polypropylene (width 65 mm, length 500 mm, thickness 25 $\mu$m; produced by dry method; porosity 55%) was prepared. This separator was cut out as a square of 5 cm $\times$ 5 cm and was used in production of a lithium ion secondary battery described below.

<Production of lithium ion secondary battery>

An aluminum packing case was prepared as a battery case. The positive electrode was cut out as a square of 4 cm $\times$ 4 cm and was arranged with a surface at the aluminum (current collector) side in contact with the aluminum packing case. Next, the square separator was arranged on the surface of the positive electrode mixed material layer of the positive electrode. The negative electrode was then cut out as a square of 4.2 cm $\times$ 4.2 cm, and this square negative electrode was arranged on the separator with a surface at the negative electrode mixed material layer-side facing toward the separator. Thereafter, a $LiPF_6$ solution of 1.0 M in concentration (containing a mixed solvent of ethylene carbonate (EC)/ethyl methyl carbonate (EMC) = 3/7 as a solvent and also containing 2 volume% of vinylene carbonate and 2% of fluoroethylene carbonate as additives) was loaded as an electrolyte solution. The aluminum packing case was then closed by heat sealing at a temperature of 150°C so as to seal an opening of the aluminum packing and produce a laminate cell-type secondary battery.
The obtained lithium ion secondary battery was used to evaluate negative electrode swelling, shedding resistance, and cycle characteristics. The results are shown in Table 1.

(Examples 2 to 4)

Various operations, measurements, and evaluations were performed in the same way as in Example 1 with the exception that the amounts of methacrylic acid, acrylic acid, styrene, and 1,3-butadiene that were used in production of the binder composition for a negative electrode were changed to amounts indicated in Table 1. The results are shown in Table 1.

(Comparative Example 1)

Various operations, measurements, and evaluations were performed in the same way as in Example 1 with the exception that the polymer solution produced in Example 1 was used as a binder composition for a negative electrode without performing a hydrogenation reaction of the polymer precursor. The results are shown in Table 1.

(Comparative Example 2)

<Production of binder composition for negative electrode>

{Phase-inversion emulsification}

SEBS (1) (Tuftec® H1051 (Tuftec is a registered trademark in Japan, other countries, or both) produced by Asahi Kasei Corporation) as a block copolymer (SEBS) having a styrene region-ethylene region/butadiene region-styrene region structure was dissolved in cyclohexane to produce a block polymer solution having a block polymer concentration of 5.0%. Next, sodium alkylbenzene sulfonate was dissolved in deionized water to produce a 0.15% aqueous solution.
Next, 1,000 g of the block polymer solution and 1,400 g of the aqueous solution were loaded into a tank and were stirred to perform preliminary mixing. Next, the preliminary mixture was transferred from the tank to a high-pressure emulsifying/dispersing device (LAB1000 produced by SPX FLOW) using a metering pump and was circulated (number of passes: 5) to yield an emulsion in which the preliminary mixture had undergone phase-inversion emulsification.
Cyclohexane in the obtained emulsion was subsequently evaporated under reduced pressure in a rotary evaporator.
Thereafter, an upper layer portion was filtered through a 100-mesh metal screen to obtain a water dispersion (block polymer latex) containing a particulate block polymer.

{Graft polymerization and cross-linking}

The block polymer latex was diluted through addition of distilled water such that the amount of water was 520 parts relative to 100 parts (in terms of solid content) of the particulate block polymer. The diluted block polymer latex was loaded into and stirred in a polymerization reactor equipped with a stirrer that had undergone nitrogen purging. While the latex solution was being stirred, 1.3 parts of t-butyl peroxy-2-ethylhexanoate was added thereto. Moreover, a separate vessel was used to mix 20 parts of acrylic acid as an ethylenically unsaturated carboxylic acid and 380 parts of distilled water to produce a diluted solution. This diluted solution was added into the polymerization reactor over 30 minutes once the polymerization reactor had been heated to 30°C so as to add 20 parts of acrylic acid relative to 100 parts of the block polymer. After further raising the temperature of the polymerization reactor to 89°C, a reaction was performed for 7 hours to yield a composition. The overall monomer composition was composed of 16.7 parts of acrylic acid as an ethylenically unsaturated carboxylic acid monomer, 35 parts of styrene as an aromatic vinyl monomer, and 48.3 parts of 1,3-butadiene as a conjugated diene monomer.
Various operations, measurements, and evaluations were performed in the same way as in Example 1 with the exception that the obtained composition was used as a binder composition for a negative electrode. The results are shown in Table 1.

(Comparative Example 3)

A composition was produced in the same way as in Comparative Example 2 with the exception that SEBS (2) (Tuftec® H1062 produced by Asahi Kasei Corporation) was used instead of SEBS (1) as a block copolymer (SEBS) having a styrene region-ethylene region/butadiene region-styrene region structure. Various operations, measurements, and evaluations were performed in the same way as in Example 1 with the exception that the obtained composition was used as a binder composition for a negative electrode. The results are shown in Table 1.

(Comparative Example 4)

Various operations, measurements, and evaluations were performed in the same way as in Example 1 with the exception that the polymer solution produced in Example 4 was used as a binder composition for a negative electrode without performing a hydrogenation reaction of the polymer precursor. The results are shown in Table 1.

[Table 1]

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Binder composition for negative electrode | Ethylenically unsaturated carboxylic acid monomer | MAA [parts by mass] | 0.1 | 0.1 | 19 | 38 | 0.1 | - | - | 19 |
| | | AA [parts by mass] | 18.9 | 9.5 | - | - | 18.9 | 16.7 | 16.7 | - |
| | Aromatic vinyl monomer | ST [parts by mass] | 33.6 | 38.3 | 33.6 | 21 | 33.6 | 35 | 15 | 33.6 |
| | Conjugated diene monomer | BD [parts by mass] | 47.4 | 52.1 | 47.4 | 41 | 47.4 | 48.3 | 68.3 | 47.4 |
| | Production method of particulate polymer | | Emulsion polymerization -> Hydrogenation | | | | Emulsion polymerization | Emulsification of hydrogenated product → Cross-linking | | Emulsion polymerization |
| | Inclusion of hydrogenation reaction step | | Yes | Yes | Yes | Yes | No | Yes | Yes | No |
| | Tetrahydrofuran-insoluble content [mass%] | | 99 | 93 | 94 | 97 | 98 | 25 | 40 | 86 |
| | Degree of swelling in tetrahydrofuran [mass%] | | 600 | 800 | 850 | 750 | 700 | 2200 | 2000 | 1200 |
| | Maximum displacement of binder film [μm] | | 10 | 25 | 25 | 20 | 40 | 35 | 50 | 45 |

EP 4 425 615 A1

(continued)

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Evaluation | Foaming of slurry composition for negative electrode | A | A | A | A | A | C | C | B |
| | Swelling of negative electrode | A | B | B | B | C | D | D | C |
| | Shedding resistance | A | B | B | B | B | D | D | C |
| | Cycle characteristics | A | B | B | B | B | D | D | C |

In Table 1:
"MAA" indicates methacrylic acid;
"AA" indicates acrylic acid;
"ST" indicates styrene; and
"BD" indicates 1,3-butadiene.

It can be seen from Table 1 that swelling of a negative electrode is suppressed and that a lithium ion secondary battery having excellent cycle characteristics is obtained when using the binder compositions for a negative electrode of Examples 1 to 4, which each contain a particulate polymer formed of a polymer including an ethylenically unsaturated carboxylic acid monomer unit, an aromatic vinyl monomer unit, and an alkylene structural unit and which each result in a maximum displacement of 30 $\mu$m or less for a binder film.

INDUSTRIAL APPLICABILITY

According to the present disclosure, it is possible to provide a binder composition for a non-aqueous secondary battery negative electrode and a slurry composition for a non-aqueous secondary battery negative electrode containing this binder composition for a non-aqueous secondary battery negative electrode that can suppress swelling of a negative electrode in accompaniment to repeated charging and discharging and improve cycle characteristics of a secondary battery.

Moreover, according to the present disclosure, it is possible to provide a negative electrode for a non-aqueous secondary battery with which swelling of the negative electrode in accompaniment to repeated charging and discharging is suppressed and that can improve cycle characteristics of a secondary battery.

Furthermore, according to the present disclosure, it is possible to provide a non-aqueous secondary battery in which swelling of a negative electrode in accompaniment to repeated charging and discharging is suppressed and in which electrical characteristics such as cycle characteristics are excellent.

**Claims**

1. A binder composition for a non-aqueous secondary battery negative electrode comprising a particulate polymer and water, wherein

   the particulate polymer is formed of a polymer including an ethylenically unsaturated carboxylic acid monomer unit, an aromatic vinyl monomer unit, and an alkylene structural unit, and
   a binder film formed using the binder composition for a non-aqueous secondary battery negative electrode displays a maximum displacement of 30 $\mu$m or less when the binder film is compressed to a maximum load of 20 mN at a loading rate of 0.2975 mN/s using a micro compression tester.

2. The binder composition for a non-aqueous secondary battery negative electrode according to claim 1, wherein the binder composition for a non-aqueous secondary battery negative electrode has a tetrahydrofuran-insoluble content of 90 mass% or more.

3. The binder composition for a non-aqueous secondary battery negative electrode according to claim 1, wherein the binder composition for a non-aqueous secondary battery negative electrode has a degree of swelling in tetrahydrofuran of not less than 300 mass% and not more than 1500 mass%.

4. The binder composition for a non-aqueous secondary battery negative electrode according to claim 1, wherein the particulate polymer further includes a conjugated diene monomer unit.

5. The binder composition for a non-aqueous secondary battery negative electrode according to claim 4, wherein proportional content of the ethylenically unsaturated carboxylic acid monomer unit in the polymer is not less than 10 mass% and not more than 60 mass%, proportional content of the aromatic vinyl monomer unit in the polymer is not less than 10 mass% and not more than 60 mass%, and total proportional content of the alkylene structural unit and the conjugated diene monomer unit in the polymer is not less than 10 mass% and not more than 80 mass%.

6. The binder composition for a non-aqueous secondary battery negative electrode according to claim 1, wherein the alkylene structural unit includes a structural unit obtained through hydrogenation of a butadiene unit.

7. A slurry composition for a non-aqueous secondary battery negative electrode comprising: a negative electrode active material; and the binder composition for a non-aqueous secondary battery negative electrode according to any one of claims 1 to 6.

8. A negative electrode for a non-aqueous secondary battery comprising: a current collector; and a negative electrode mixed material layer located on the current collector, wherein the negative electrode mixed material layer is a layer formed using the slurry composition for a non-aqueous secondary battery negative electrode according to claim 7.

9. A non-aqueous secondary battery comprising a positive electrode, a negative electrode, a separator, and an electrolyte solution, wherein the negative electrode is the negative electrode for a non-aqueous secondary battery according to claim 8.

<table>
<tr><td colspan="2">**INTERNATIONAL SEARCH REPORT**</td><td>International application No.<br>**PCT/JP2022/037914**</td></tr>
</table>

**A.    CLASSIFICATION OF SUBJECT MATTER**

*H01M 4/62*(2006.01)i; *H01M 4/139*(2010.01)i; *H01M 10/052*(2010.01)i; *H01M 10/0566*(2010.01)i
FI:    H01M4/62 Z; H01M4/139; H01M10/052; H01M10/0566

According to International Patent Classification (IPC) or to both national classification and IPC

**B.    FIELDS SEARCHED**

Minimum documentation searched (classification system followed by classification symbols)

H01M4/62; H01M4/139; H01M10/052; H01M10/0566

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/085344 A1 (ZEON CORP) 06 May 2021 (2021-05-06)<br>paragraphs [0019]-[0020], [0089] | 1-9 |
| A | WO 2019/131210 A1 (ZEON CORP) 04 July 2019 (2019-07-04)<br>paragraphs [0019], [0084] | 1-9 |
| A | WO 2016/039067 A1 (JSR CORP) 17 March 2016 (2016-03-17)<br>paragraphs [0030], [0149] | 1-9 |
| A | JP 2019-537232 A (LG CHEMICAL LTD) 19 December 2019 (2019-12-19)<br>paragraphs [0011]-[0012], [0078] | 1-9 |
| A | CN 111710864 A (TIANMU LAKE INSTITUTE OF ADVANCED ENERGY STORAGE TECHNOLOGIES CO., LTD.) 25 September 2020 (2020-09-25)<br>paragraphs [0031], [0042] | 1-9 |

☐ Further documents are listed in the continuation of Box C.     ☑ See patent family annex.

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **15 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/037914**

| Patent document cited in search report | | | Publication date (day/month/year) | Patent family member(s) | | | Publication date (day/month/year) |
|---|---|---|---|---|---|---|---|
| WO | 2021/085344 | A1 | 06 May 2021 | CN | 114600265 | A | |
| | | | | KR | 10-2022-0093112 | A | |
| WO | 2019/131210 | A1 | 04 July 2019 | US | 2021/0066720 | A1 | |
| | | | | paragraphs [0025], [0177]-[0179] | | | |
| | | | | EP | 3734726 | A1 | |
| | | | | CN | 111542952 | A | |
| | | | | KR | 10-2020-0103657 | A | |
| WO | 2016/039067 | A1 | 17 March 2016 | US | 2017/0279123 | A1 | |
| | | | | paragraphs [0042], [0167] | | | |
| | | | | EP | 3193397 | A1 | |
| | | | | KR | 10-2017-0039227 | A | |
| | | | | CN | 106663812 | A | |
| | | | | TW | 201611396 | A | |
| | | | | PL | 3193397 | T3 | |
| JP | 2019-537232 | A | 19 December 2019 | US | 2020/0235395 | A1 | |
| | | | | paragraphs [0011]-[0012], [0081] | | | |
| | | | | EP | 3483964 | A1 | |
| | | | | KR | 10-2018-0111617 | A | |
| | | | | CN | 109716566 | A | |
| | | | | PL | 3483964 | T3 | |
| CN | 111710864 | A | 25 September 2020 | (Family: none) | | | |

Form PCT/ISA/210 (patent family annex) (January 2015)

**EP 4 425 615 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018182343 A1
- WO 2016039067 A1
- WO 2021065742 A1
- WO 2012115096 A1
- JP 2012204303 A